# EUROPÄISCHE PATENTSCHRIFT

(11) **EP 1 851 075 B1**
(45) Veröffentlichungstag und Bekanntmachung des Hinweises auf die Patenterteilung: **06.04.2011**
(21) Anmeldenummer: 06706989.8
(22) Anmeldetag: 16.02.2006
(51) Int. Cl.: B60H 1/22

(54) **HEIZVORRICHTUNG ZUM ERWÄRMEN EINES LUFTSTROMS INSBESONDERE FÜR EIN KARFTFAHRZEUG**
HEATING DEVICE FOR HEATING AN AIRFLOW IN PARTICULAR FOR A MOTOR VEHICLE
DISPOSITIF DE CHAUFFAGE POUR CHAUFFER UN FLUX D'AIR NOTAMMENT POUR UN VEHICULE AUTOMOBILE

(30) Priorität: 23.02.2005 DE 102005008596; 23.02.2005 DE 202005008318 U
(43) Veröffentlichungstag der Anmeldung: 07.11.2007
(73) Patentinhaber: Daimler AG, 70327 Stuttgart (DE)
(72) Erfinder: HARTMANN, Dietmar, 71131 Jettingen (DE); MALY, Peter, 72184 Eutingen (DE); PFAHLER, Karl, 70180 Stuttgart (DE); RENNER, Lothar, 71154 Nufringen (DE); VON SZCZEPANSKI, Ina, 70567 Stuttgart (DE)
(74) Vertreter: JENSEN & SON
(86) Internationale Anmeldenummer: PCT/EP2006/001388
(87) Internationale Veröffentlichungsnummer: WO 2006/089672

(56) Entgegenhaltungen:
- EP-A- 1 182 908
- EP-A- 1 193 095
- DE-A1- 19 805 178
- DE-C- 19 628 698
- DE-U- 1 811 481
- FR-A- 2 580 451
- US-A- 4 963 716
- US-A- 5 243 683
- US-A- 5 399 838

## Beschreibung

Die Erfindung betrifft eine Kraftfahrzeugheizvorrichtung zum Erwärmen eines Luftstroms insbesondere für ein Kraftfahrzeug der im Oberbegriff des Patentanspruchs 1 angegebenen Art.

Die DE 196 8 698 C1 zeigt eine Kraftfahrzeugheizvorrichtung für einen Kraftfahrzeugsitz zum Erwärmen eines Luftstroms mit einer luftdurchflutbaren Ventilationsschicht, die mit einem luftdurchlässigen Polsterbezug überspannt ist.

Die EP 1 193 095 A2 zeigt eine Windschutzeinrichtung für einen offenen Kraftwagen mit einem Fahrzeugsitz, der eine Luftverteileinrichtung mit einer Ventilationsschicht in der Rückenlehne des Fahrzeugsitzes aufweist.

Eine Kraftfahrzeugheizvorrichtung gemäß dem Oberbegriff ist beispielsweise aus der EP 1 182 908 B1 als bekannt zu entnehmen. Dort sind mehrere durch elektrischen Strom betreibbare PTC-Heizelemente innerhalb eines Positionsrahmens angeordnet und bilden eine Heizschicht, mittels welcher eine Vielzahl von Wellrippen einer luftdurchflutbaren Schicht beheizt werden können. Die Wellrippen bilden dabei einzelne Kanäle aus, bei deren Durchströmen der durch ein Gebläse erzeugte Luftstrom erwärmt wird.

Als nachteilig bei dieser bekannten Kraftfahrzeugheizvorrichtung ist der Umstand anzusehen, dass der durch das Gebläse erzeugte Luftstrom im Wesentlichen laminar die einzelnen, durch die Wellrippen gebildeten Teilkanäle durchströmt. Hierdurch nimmt jeder der durch die Teilkanäle strömenden Teilluftströme im Wesentlichen lediglich im Grenzschichtbereich zur jeweiligen Wandfläche der entsprechenden Wellrippe Wärme von dieser auf. Dies führt zu einer -im Querschnitt betrachtet- äußerst ungünstigen Temperaturverteilung innerhalb jedem der Teilluftströme. Darüber hinaus durchströmt der Luftstrom beziehungsweise die Teilluftströme die in Strömungsrichtung verlaufenden Teilkanäle relativ schnell, so dass nur wenig Wärme von den Wellrippen auf den Luftstrom beziehungsweise die Teilluftströme übertragen werden kann. Es ist ersichtlich, dass der Wirkungsgrad der vorliegenden Kraftfahrzeugheizvorrichtung deutlich verbesserbar ist.

Da die bekannte Kraftfahrzeugheizvorrichtung eine Luftdurchströmung nur entsprechend der Orientierung der einzelnen Teilluftkanäle erlaubt, sind die Einbaumöglichkeiten zudem entsprechend begrenzt. Darüber hinaus ist die vorliegende Kraftfahrzeugheizvorrichtung aus Metall gestaltet und dementsprechend starr ausgebildet, so dass eine Anpassung an zur Verfügung stehende Bauräume äußerst schwierig ist.

Aufgabe der vorliegenden Erfindung ist es daher, eine Kraftfahrzeugheizvorrichtung der eingangs genannten Art mit einem verbesserten Wirkungsgrad und mit besseren Einsatzmöglichkeiten zu schaffen.

Diese Aufgabe wird erfindungsgemäß durch eine Kraftfahrzeugheizvorrichtung mit den Merkmalen des Patentanspruchs 1 gelöst. Vorteilhafte Ausgestaltungen und zweckmäßige, nicht-triviale Weiterbildungen der Erfindung sind in den Unteransprüchen angegeben.

Bei der Kraftfahrzeugheizvorrichtung nach der Erfindung ist die luftdurchflutbare Schicht mit einer Struktur versehen, mit welcher der eintretende Luftstrom in eine turbulente beziehungsweise diffuse Strömung überführbar ist. Eine derart turbulente beziehungsweise diffuse Strömung hat den Vorteil, dass diese gegenüber der im Stand der Technik vorgesehenen weitgehend laminaren Strömung -bei entsprechend vergleichbarer Gebläseleistung- weitaus mehr Wärme aufnehmen kann. Im Unterschied zu der im Stand der Technik beschriebenen laminaren Strömung erwärmen sich vorlegend nicht nur die unmittelbar mit einer Wellrippe in Berührung kommenden Grenzschichten, sondern ein weitaus größerer Luftanteil. Darüber hinaus bewirkt die erzeugte turbulente beziehungsweise diffuse Strömung einen längeren Verbleib des Luftstroms innerhalb der luftdurchflutbaren Schicht, so dass mehr Wärme aufgenommen werden kann.

Die turbulente beziehungsweise diffuse Strömung des Luftstroms wird dadurch erreicht, dass die Struktur der luftdurchflutbaren Schicht eine Vielzahl von Abstandsfäden, -stegen, -drähten oder dergleichen aufweist. Eine denkbare Gestaltung dieser luftdurchflutbaren Schicht ist beispielsweise aus der DE 198 05 178 C2 als bekannt zu entnehmen, welche ein Abstandsgewirke bei einem belüfteten Fahrzeugsitz betrifft und auf deren Inhalt hiermit ausdrücklich Bezug genommen wird. Das dortige Abstandsgewirke umfasst eine Vielzahl von Abstandsstegen beziehungsweise - fäden, welche quer zu den äußeren Breitseiten des Abstandsgewirkes verlaufen und durch eine turbulente beziehungsweise diffuse Luftströmung umströmt werden können. Die Abstandsstege beziehungsweise -fäden sind dabei in spezifischen Mustern zueinander angeordnet, durch welche die Strömungsrichtung und Strömungsgeschwindigkeit beeinflusst werden können. In diesem Zusammenhang sei angemerkt, dass die Abstandsstege beziehungsweise -fäden verschiedenste Querschnittsformen aufweisen können, wie zum Beispiel kreisförmige, ovale, rechteckige, quadratische oder dergleichen. Die Abstandstege beziehungsweise -fäden können dabei zueinander orientiert oder unorientiert ausgerichtet sein und aus verschiedensten Materialien bestehen. Als besonders vorteilhaft hat es sich erwiesen, die Abstandstege beziehungsweise -fäden als Gewirke, Gewebe oder als Geflecht auszubilden. Gleichwohl ist es jedoch denkbar, die Abstandsfäden beziehungsweise -stege unorientiert nach Art einer Wolle anzuordnen. Es ist ersichtlich, dass ein solches Gewirke, Gewebe oder als Geflecht gegenüber dem Stand der Technik zudem eine weitaus größere umströmte Fläche zur Abgabe von Wärme an die durchströmenden Luft aufweist.

Als besonders vorteilhaft hat es sich zudem gezeigt, die Struktur der luftdurchflutbaren Schicht aus einem gut leitenden Metall wie beispielsweise einer Aluminium- oder Kupferlegierung herzustellen. Derartige Metallfäden sind demnach besonders gut geeignet, Wärme an die umströmende Luft abzugeben. Durch die große umströmte Fläche der Vielzahl von Abstandsfäden, -drähten beziehungsweise -stegen kann somit eine sehr wirkungsvolle Kraftfahrzeugheizvorrichtung geschaffen werden.

Eine vorbeschriebene Struktur aus Abstandsstegen, -drähten oder -fäden hat zudem den Vorteil, dass diese elastisch nachgiebig ausgebildet werden kann. Hierdurch ist es möglich, die luftdurchflutbare Schicht beziehungsweise das gesamte Sandwich aus Heizschicht und luftdurchflutbarer Schicht auf entsprechend einfache Weise an den Bauraum anzupassen, innerhalb welchem die Kraftfahrzeugheizvorrichtung angeordnet werden soll. In diesem Zusammenhang hat es sich als besonders vorteilhaft gezeigt, die Heizschicht als Widerstandsheizung in Form einer dünnschichtigen, verformbaren und vorzugsweise elastischen Lage auszubilden.

Eine besonders hohe Heizleistung der Heizschicht kann erreicht werden, wenn dieser eine gut wärmeleitende Deckschicht zugeordnet wird, durch welche die mittels der Widerstandsheizung erzeugte Wärme gleichmäßig innerhalb der Heizschicht verteilt wird. Als gut wärmeleitende Deckschicht ist insbesondere eine Metallfolie oder ein Metallblech beispielsweise aus einer Aluminium- oder Kupferlegierung denkbar.

Ein besonders wirkungsvolles Sandwich der Kraftfahrzeugheizvorrichtung wird dadurch geschaffen, dass wenigstens drei luftdurchflutbare Schichten vorgesehen sind, wobei zwischen der mittleren und der äußeren luftdurchflutbaren Schicht jeweils eine Heizschicht angeordnet wird. Die zentrale mittlere luftdurchflutbare Schicht wird somit von beiden diese flankierenden Heizschichten mit Wärme versorgt, so dass der die mittlere Schicht durchströmende Luftstrom besonders schnell erwärmt werden kann. Die beiden äußeren luftdurchflutbaren Schichten werden demgemäß lediglich von der benachbarten Heizschicht mit Wärme versorgt, so dass sich in diesem Bereich eine geringere Erwärmung des diese durchströmenden Luftstromes ergibt. Hierdurch ist unter anderem gewährleistet, dass sich keine Überhitzung der dieses Sandwich umgebenden Bauteile wie beispielsweise eines Gehäuses oder daran angrenzender weiterer Teile ergibt.

Bei mehreren zu einem Sandwich zusammengefassten Schichten kann zudem deren Strömungswiderstand unterschiedlich gestaltet werden, indem beispielsweise die Distanz und Orientierung der einzelnen Abstandstege, -drähte oder -fäden jeder Schicht unterschiedlich ist. So kann beispielsweise durch ein entsprechend feinmaschigeres Gewirke oder Gewebe oder dergleichen der mittleren der drei luftdurchflutbaren Schichten erreicht werden, dass der diese durchströmende Luftstrom dort länger verbleibt als in den beiden äußeren Schichten. Im Ergebnis bewirkt dies eine entsprechend bessere Durchwärmung des durchströmenden Luftstroms.

Das Sandwich aus der Heizschicht und der luftdurchflutbaren Schicht ist in einfachster Ausführungsform eben gestalten. Dabei ist die Anzahl der luftdurchflutbaren Schichten und er dazwischen angeordneten Heizschichtig beliebig wählbeziehungsweise erweiterbar. Auch die äußeren Abmessungen des Sandwich sind beliebig gestaltbar. Darüber hinaus kann das Sandwich aus der luftdurchflutbaren Schicht und der Heizschicht auch im Wesentlichen schneckenförmig ausgebildet und im Querschnitt auf jeden beliebigen Durchmesser erweiterbar ausgebildet sein.

Bei einer weiteren bevorzugten Ausführungsform ist eine zentral angeordnete luftdurchflutbare Schicht umfangsseitig von einer Heizschicht umgeben. Hierdurch ergibt sich eine besonders schnelle und homogene Erwärmung des durchströmenden Luftstroms. Umfangsseitig der Heizschicht kann dabei eine weitere luftdurchflutbare Schicht vorgesehen sein, wobei dann bei einer bevorzugten Ausführungsform die zentrale Schicht durch strömenden Luftstrom stärker erwärmt wird als der die umfangsseitig angeordnete Schicht durchströmende Luftstrom. Dieser Aufbau ermöglicht einen in der zentralen luftdurchflutbaren Schicht sehr schnell und stark erwärmbaren Luftstrom, während der durch die umfangsseitig angeordnete äußere luftdurchflutbare Schicht hindurchgelangende Luftstrom eine geringere Temperatur aufweist, und dementsprechend angrenzende Bauteile wie beispielsweise ein Gehäusewand nicht überhitzt werden können. Es ist klar, dass eine derart zentrisch aufgebaute Anordnung von luftdurchflutbaren Schichten mit gegebenenfalls dazwischen angeordneten Heizschichten beliebig erweiterbar ist. Darüber hinaus sind sowohl kreisförmige wie auch ovale oder dergleichen Anordnungen der Heizschichten denkbar.

Weiter Vorteile, Merkmale und Einzelheiten der Erfindung ergeben sich aus der nachfolgenden Beschreibung von bevorzugten Ausführungsbeispielen sowie anhand der Zeichnungen; diese zeigen in:
- Fig. 1: eine schematische Schnittansicht auf die erfindungsgemäße Kraftfahrzeugheizvorrichtung nach einer ersten Ausführungsform, welcher zwei Heizschichten zwischen drei luftdurchflutbaren Schichten angeordnet sind;
- Fig. 2: eine schematische Schnittansicht auf die Kraftfahrzeugheizvorrichtung nach einer weiteren Ausführungsform, bei welcher eine beliebig erweiterbare Mehrzahl von luftdurchflutbaren Schichten durch jeweils eine Heizschicht voneinander getrennt sind;
- Fig. 3: eine schematische Perspektivansicht auf die Kraftfahrzeugheizvorrichtung nach einer dritten Ausführungsform, bei welcher das Sandwich aus der luftdurchflutbaren Schicht und der Heizschicht im Wesentlichen schneckenförmig aufgewickelt und innerhalb eines Luftkanal angeordnet ist;
- Fig. 4: einen schematischen Querschnitt durch die Kraftfahrzeugheizvorrichtung nach einer vierten Ausführungsform, bei welcher eine zentrale luftdurchflutbare Schicht umfangsseitig von einer Heizschicht sowie von einer weiteren luftdurchflutbaren Schicht umgeben ist;
- Fig. 5: einen schematischen Querschnitt durch die Kraftfahrzeugheizvorrichtung nach einer fünften Ausführungsform, welche sich gegenüber dem Aufbau der Kraftfahrzeugheizvorrichtung gemäß Fig. 4 durch einen im Wesentlichen ovalen Querschnitt unterscheidet;
- Fig. 6a, 6b: eine Draufsicht beziehungsweise eine Schnittansicht entlang der Linie VIb-VIb in Fig. 6a durch die Struktur der luftdurchflutbaren Schicht gemäß einer ersten Ausführungsform;
- Fig. 7a, 7b: eine Draufsicht auf beziehungsweise eine Schnittansicht entlang der Linie VIIb-VIIB in Figur 7a durch die Struktur der luftdurchflutbaren Schicht nach einer zweiten Ausführungsform;
- Fig. 8a, 8b: eine schematische Draufsicht auf beziehungsweise eine schematische Schnittansicht entlang der Linie VIIIb-VIIIb in Figur 8a durch die Struktur der luftdurchflutbaren Schicht gemäß einer dritten Ausführungsform;
- Fig. 9: eine schematische Draufsicht auf die Struktur der luftdurchflutbaren Schicht gemäß einer vierten Ausführungsform; und in
- Fig. 10a, 10b: eine schematische Draufsicht auf beziehungsweise Schnittansicht entlang der Linie Xb-Xb in Figur 10a durch die Struktur der luftdurchflutbaren Schicht gemäß einer fünften Ausführungsform.

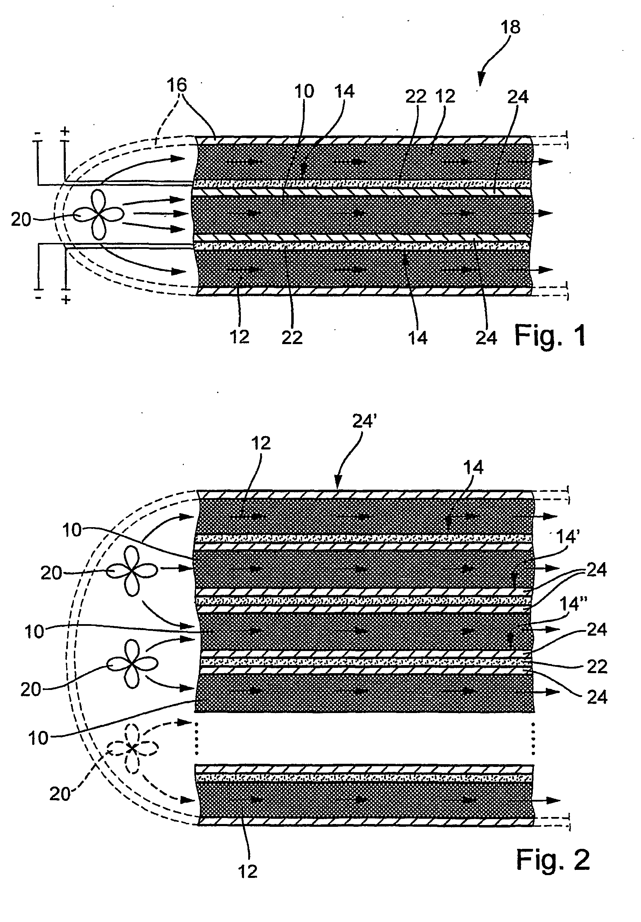

In Figur 1 ist in schematischer Schnittdarstellung eine Kraftfahrzeugheizvorrichtung zum Erwärmen eines Luftstroms insbesondere innerhalb eines Kraftwagens dargestellt, bei welchem eine mittlere luftdurchflutbare Schicht 10 sowie zwei äußere luftdurchflutbare Schichten 12 sowie zwei im Weiteren noch näher beschriebene Heizschichten 14 zu einem Sandwich 18 vereinigt sind. Dieses Sandwich 18 ist im vorliegenden Ausführungsbeispiel innerhalb eines Gehäuses 16 beziehungsweise eines Luftkanals angeordnet, welcher beispielsweise aus einem üblichen Kunststoff hergestellt ist. Innerhalb des Gehäuses 16 ist dem Sandwich 18 ein Gebläse 20 vorgeschaltet, von welchem in Fig. 1 lediglich ein schematisch angedeutetes Lüfterrad erkennbar ist. Mittels dieses Gebläses 20 ist ein Luftstrom erzeugbar, der im vorliegenden Ausführungsbeispiel die drei luftdurchfluftbaren Schichten 10, 12 durchströmen kann. Die zwischen der mittleren luftdurchflutbaren Schicht 10 und der jeweils zugeordneten äußeren luftdurchflutbaren Schicht 12 angeordnete Heizschicht 14 umfasst jeweils mit elektrischem Strom versorgbare Widerstandsheizungen und ist vorliegend als dünnschichtige, verformbare und elastische Lage 22 ausgebildet. Den beiden Heizschichten 14 ist jeweils eine gut wärmeleitende Deckschicht 24 zugeordnet, welche jeweils an der Breitseite der mittleren luftdurchflutbaren Schicht 10 anschließen und im gezeigten Ausführungsbeispiel aus einer gut wärmeleitenden Metallfolie oder einem Metallblech insbesondere aus einer Aluminium- oder Kupferlegierung hergestellt sind. Alle Schichten 10, 12, 14, 22 und 24 sind im vorliegenden Ausführungsbeispiel eben und eng aneinander anliegend ausgebildet.

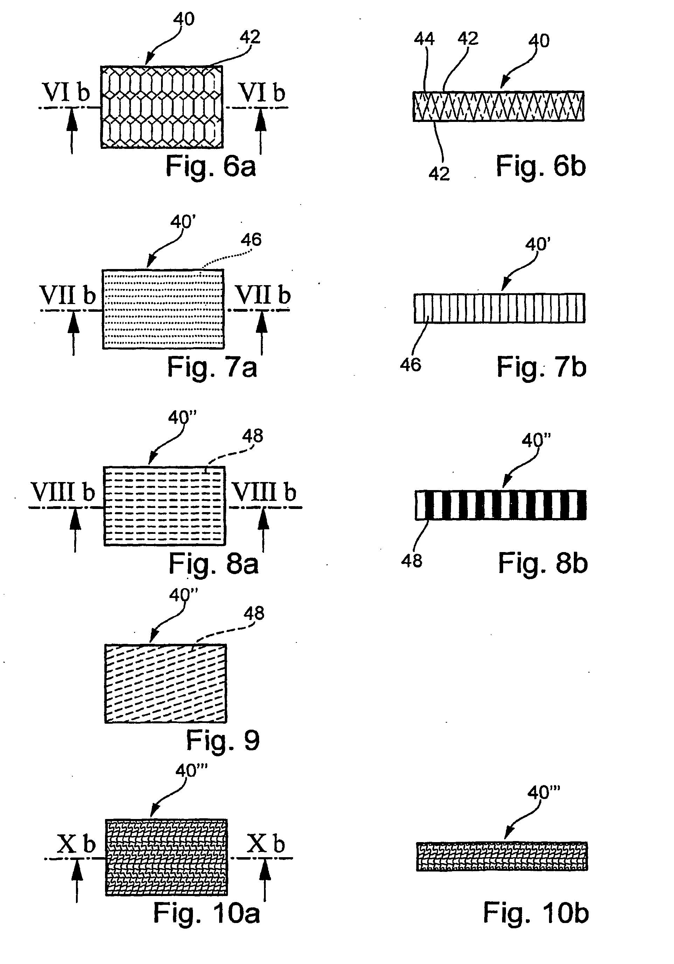

Wird durch das stromaufwärts dem Sandwich 18 vorgelagerte Gebläse 20 ein Luftstrom erzeugt, so gelangt dieser über die jeweilige Schmalseite in die mittlere luftdurchflutbare Schicht 10 sowie in die beiden äußeren luftdurchflutbaren Schichten 12. Die drei luftdurchflutbaren Schichten 10, 12 sind im vorliegenden Ausführungsbeispiel aus einem im Weiteren unter Bezugnahme auf die Figuren 6a und 6b noch näher beschriebenen Abstandgewirke hergestellt, welches aus einer Vielzahl von Abstandsfäden beziehungsweise Abstandsstegen besteht. Die Abstandsfäden beziehungsweise Abstandsstege verlaufen dabei im Wesentlichen quer zur Strömungsrichtung des Luftstroms beziehungsweise quer zu den Breitseiten der luftdurchflutbaren Schichten 10, 12. Anstelle eines derartigen Abstandsgewirkes kann selbstverständlich auch ein aus einer Vielzahl von Abstandsfäden oder dergleichen hergestelltes Gewebe, Geflecht oder ein wollartiges Gebilde verwendet werden. Mit anderen Worten können die Abstandsstege beziehungsweise die Abstandsfäden sowohl zueinander orientiert angeordnet sein, wie dies beispielsweise bereits in der Druckschrift DE 198 05 178 C2 beschrieben ist, oder aber -wie bei Wolle üblich- ungeordnet zueinander sein. Ein durch das Gebläse 20 erzeugter Luftstrom wird demnach beim Durchströmen der jeweiligen luftdurchflutbaren Schicht 10, 12 entsprechend häufig an den Abstandsfäden beziehungsweise den Abstandsstegen abgelenkt und es stellt sich innerhalb der jeweiligen luftdurchflutbaren Schicht 10, 12 bereits nach einer kurzer Wegstrecke eine turbulente diffuse Strömung ein. Gegenüber einer laminaren Strömung verbleibt diese mittels der Abstandsfäden beziehungsweise Abstandsstege erzeugte diffuse Strömung länger innerhalb der zugehörigen luftdurchflutbaren Schicht 10, 12 und kann dementsprechend mehr Wärme über das Heizelement 14 -bestehend aus der Widerstandsheizungs-Lage 22 und der Deckschicht 24- aufnehmen. Die diffuse Verteilung des Luftstroms innerhalb der jeweiligen luftdurchflutbaren Schicht 10, 12 bewirkt zudem, dass nicht nur einzelne Grenzschichten mit der jeweiligen Heizschicht 14 in Kontakt kommen, sondern vielmehr wird eine gute und homogene durch Mischung der Luftströmung erreicht.

Da die mittlere luftdurchflutbare Schicht 10 an ihren beiden Breitseiten von jeweils einer Heizschicht 14 beziehungsweise einer Deckschicht 24 begrenzt ist, wird der durch die mittlere luftdurchflutbare Schicht 10 gelangende Luftstrom besonders stark erwärmt. Aufgrund der Tatsache, dass die beiden äußeren luftdurchflutbaren Schichten 12 jeweils nur auf ihrer der mittleren Schicht 10 zugewandten Breitseite mit der Heizschicht 14 beziehungsweise deren Widerstandsheizungs-Lage 22 in Kontakt kommen, werden die beiden durch die jeweils äußere luftdurchflutbare Schicht 12 gelangenden Luftströme weniger stark erwärmt als der durch die mittlere luftdurchflutbare Schicht 10 gelangende Luftstrom. Hierdurch wird unter anderem gewährleistet, dass die Wandung des Gehäuses 16 nicht durch hohe Temperaturen der durch die äußeren luftdurchflutbaren Schichten 12 gelangenden Luftströme überhitzt werden kann. Mit anderen Worten wirken die beiden die äußeren luftdurchflutbaren Schichten 12 durchströmenden Teilluftströme als eine Art Wärmeisolator für den zentralen wärmeren Teilluftstrom.

Im vorliegenden Ausführungsbeispiel weist die mittlere luftdurchflutbare Schicht 10 zudem einen höheren Strömungswiderstand auf als die beiden diese flankierenden äußeren luftdurchflutbaren Schichten 12. Der höhere Strömungswiderstand wird dadurch erzielt, dass die Abstandsfäden beziehungsweise die Abstandsstege der mittleren luftdurchflutbaren Schicht 10 enger zueinander angeordnet und somit das Gewirke oder Gewebe insgesamt engmaschiger beziehungsweise dichter gestaltet ist, als die Struktur der beiden äußeren luftdurchflutbaren Schichten 12. Hierdurch wird -bei gleicher Eintrittsgeschwindigkeit aller Luftströme an der Eintrittseite der luftdurchflutbaren Schichten 10 ,12-erreicht, dass der Teilluftstrom durch die mittlere Schicht 10 diese langsamer durchströmt als die beiden Teilluftströme, welche durch die beiden äußeren Schichten 12 gelangen. Durch unterschiedliche Geschwindigkeiten kann demgemäß durch die einzelnen Luftströme mehr oder weniger an Wärme aufgenommen werden. Außerdem kann an der Austrittsseite eine gegebenenfalls erwünschte Schichtung des Gesamtluftstrom erreicht werden, nämlich mit einem mittleren wärmeren Luftstrom aus der mittleren Schicht 10 und zwei äußeren, etwas weniger warmen Luftströmen aus den äußeren Schichten 12. Der mittels der Kraftfahrzeugheizvorrichtung erzeugte Warmluftstrom kann für unterschiedlichste Anwendungen insbesondere innerhalb der Fahrgastzelle eines Kraftwagens eingesetzt werden. So sind beispielsweise Anwendungen im Bereich der Fahrzeugscheiben zur Versorgung von Heizdüsen beziehungsweise Defrosterdüsen mit Warmluft denkbar wie auch die Versorgung von anderen spezifischen Räumen, dem Fußraum oder dergleichen innerhalb des Kraftwagens denkbar. Darüber hinaus kann die Kraftfahrzeugheizvorrichtung auch im Zusammenhang mit der Sitzheizung, der Sitzbelüftung und der Sitzklimatisierung eines Kraftwagensitzes Anwendung finden. Außerdem kann die Kraftfahrzeugheizvorrichtung innerhalb des Kraftwagensitzes zur Versorgung des Kopf-, Schulter- und Nackenbereichs des Sitzinsassen entsprechende Anwendung finden.

Figur 2 zeigt in einer schematischen Schnittansicht die Kraftfahrzeugheizvorrichtung nach einer zweiten Ausführungsform, bei der ein Sandwich 18' eine Mehrzahl von luftdurchflutbaren Schichten 10, 12 und Heizschichten 14 umfasst. Wie gestrichelt angedeutet, ist das Sandwich 24' dabei um eine oder mehrere mittlere luftdurchflutbare Schichten 10 ergänzbar und somit in seiner Dicke variierbar. In der hier gezeigten Ausführungsform sind drei mittlere luftführende Schichten 10 sowie außenseitig jeweils eine äußere luftdurchflutbare Schicht 12 angeordnet, wobei zwischen den einzelnen luftdurchflutbaren Schichten 10, 12 jeweils wenigstens eine Heizschicht 14 vorgesehen ist. Das Sandwich 24' ist dabei wiederum innerhalb eines Gehäuses 16 angeordnet und im vorliegenden Ausführungsbeispiel einer Mehrzahl von Gebläsen 20 nachgeschaltet. Je nach Dicke des Sandwichs 24 kann dabei die Anzahl der Lüfter 20 variiert werden. Dabei ist denkbar, dass jeder Lüfter 20 für spezifische luftdurchflutbare Schichten 10, 12 vorgesehen ist, oder aber, dass alle Lüfter 20 einen Gesamtluftstrom erzeugen, welcher dann in die luftdurchflutbaren Schichten 10, 12 eingeleitet werden kann.

Während in Figur 2 die oberste Heizschicht 14 zu der obersten Heizschichten 14 gemäß Figur 1 identisch ist, weisen die von oben gesehen zweitoberste und drittoberste Heizschicht 14', 14 " einen jeweils andersartigen Aufbau auf. Bei der zweitobersten Heizschicht 14' ist unmittelbar anschließend an die darüber liegende beziehungsweise darunter liegende luftdurchflutbare mittlere Schicht 10 jeweils eine Deckschicht 24 vorgesehen, welche wiederum aus einem gut wärmeleitenden Metallblech oder einer Metallfolie hergestellt ist. Jeder der beiden Deckschichten 24 ist jeweils eine Widerstandsheizungs-Lage 22 zugeordnet, wie diese bereits unter Bezugnahme auf Figur 1 beschrieben worden sind. Von diesem Aufbau der zweitobersten Heizschicht 14' unterscheidet sich der Aufbau der drittobersten Heizschicht 14 " dadurch, dass anstelle von zwei Widerstandsheizungs-Lagen 22 lediglich eine zwischen den beiden Deckschichten 24 angeordnet ist und somit diese beiden Deckschichten 24 beheizt. Hinsichtlich der Funktionsweise der Kraftfahrzeugheizvorrichtung gemäß Figur 2 wird auf die Funktionsweise der Kraftfahrzeugheizvorrichtung gemäß Figur 1 verwiesen, welche bis auf die unterschiedliche Anzahl der verwendeten luftdurchflutbaren Schichten 10 beziehungsweise der hierbei zugeordneten Heizschichten 14 unterschiedlich ist.

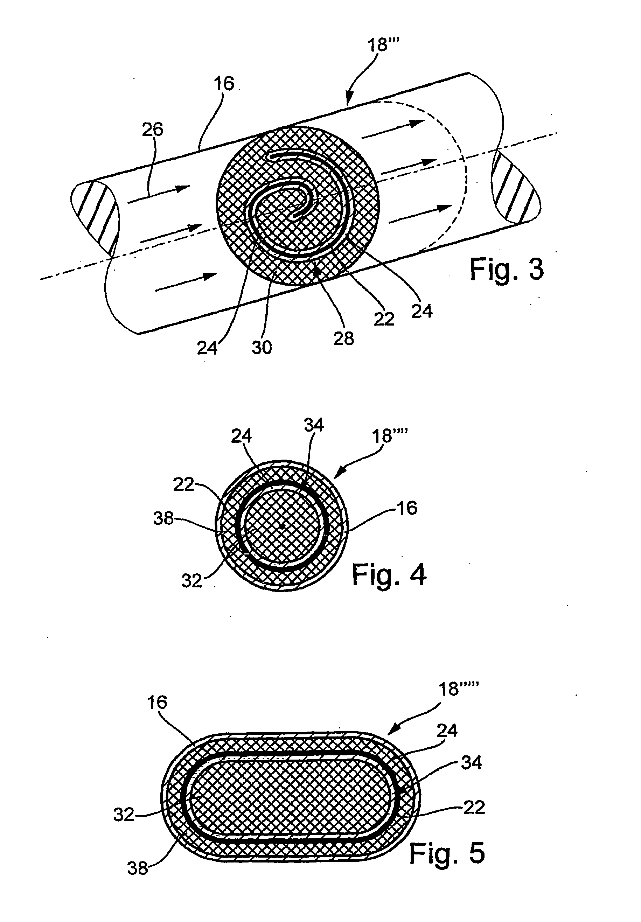

Figur 3 zeigt in schematischer Perspektivdarstellung die Kraftfahrzeugheizvorrichtung nach einer dritten Ausführungsform, welche innerhalb eines als rohrförmiger Luftkanal ausgebildeten Gehäuses 16 angeordnet ist. Innerhalb dieses Gehäuses 16 ist stromaufwärts des im Weiteren noch näher erläuterten Sandwich 18"' ein nicht dargestelltes Gebläse vorgesehen, durch welches ein mit Pfeilen 26 dargestellter Luftstrom erzeugt wird. Das Sandwich 18"' besteht im Wesentlichen aus einer Heizschicht 28 und einer luftdurchflutbaren Schicht 30 und ist zu einer in Querschnitt etwa kreisrunden Schnecke aufgewickelt. Die luftdurchflutbare Schicht 30 ist dabei so ausgebildet, dass diese die Heizschicht 28 umfangseitig vollständig umschließt. Die Heizschicht 28 besteht wiederum aus einer Widerstandsheizungs-Lage 22, welche an ihren beiden Breitseiten von jeweils einer Deckschicht 24 vorzugsweise aus einer Metallfolie oder einem Metallblech abgedeckt ist. Es ist ersichtlich, dass auch hier zentrale Abschnitte der luftdurchflutbaren Schicht 30 an ihren beiden Breitseiten von der Heizschicht 28 flankiert sind. In diesen Bereichen ist demgemäß eine starke Aufheizung des Luftstroms möglich. Demgegenüber sind die umfangseitig außen liegenden beziehungsweise an die Wandung des Gehäuses 16 angrenzenden Abschnitte der luftdurchflutbaren Schicht 30 lediglich an einer -nämlich der inneren- Breitseite von der Heizschicht 28 flankiert. Demgemäß wird der Teil des Luftstroms, welcher durch die außen liegenden, an die Wandung des Gehäuses 16 angrenzenden Bereiche der luftdurchflutbaren Schicht 30 hindurchströmt, weniger stark erwärmt als die vorbeschriebenen inneren Teile des Gesamtluftstroms. Im Ergebnis ist hiermit auch eine -in Querschnitt betrachtet-Schichtung des Gesamtluftstroms geschaffen, wobei ein zentraler Teilluftstrom stärker erwärmt wird als ein äußerer Teil des Luftstroms. Es ist klar, dass die luftdurchflutbare Schicht 30 auch mehrere Abschnitte umfassen kann, welche einen unterschiedlichen Strömungswiderstand aufweisen.

In Figur 4 ist in einer schematischen Querschnittsansicht die Kraftfahrzeugheizvorrichtung nach einer vierten Ausführungsform gezeigt, bei welcher das Sandwich 18^{IV} innerhalb eines als rohrförmiger Luftkanal 16 ausgebildetes Gehäuse angeordnet ist. Das Sandwich 18 ^{IV} umfasst dabei eine zentrale, im Querschnitt insgesamt etwa kreisförmige luftdurchflutbare Schicht 32, welche umfangseitig von einer Heizschicht 34 umgeben ist. Die Heizschicht 34 umfasst ein an die äußere Mantelseite der luftdurchflutbaren Schicht 32 anschließende Deckschicht 24 aus Metallblech oder Metallfolie, welche wiederum außenseitig von einer Widerstandsheizungs-Lage 22 umschlossen ist.
Außenumfangseitig der Heizschicht 34 ist eine äußere luftdurchflutbare Schicht 38 vorgesehen, welche zwischen der Heizschicht 34 und der Wandung des Gehäuses 16 verläuft. Auch hier ist ersichtlich, dass die zentral angeordnete luftdurchflutbare Schicht 32 stärker erwärmt werden kann als die äußere luftdurchflutbare Schicht 38. Auch hier können die zentrale luftdurchflutbare Schicht 32 und die äußere luftdurchflutbare Schicht 38 einen unterschiedlichen Strömungswiderstand für den durchströmenden Luftstrom bieten.

In Figur 5 ist die Kraftfahrzeugheizvorrichtung nach einer fünften Ausführungsform dargestellt, welche sich von der Ausführungsform gemäß Figur 4 im Wesentlichen lediglich dadurch unterscheidet, dass vorliegend ein ovaler Querschnitt des Sandwich 18^{V} gewählt worden ist. Demgemäß sind in Figur 5 gleiche Bauteile mit gleichen Bezugszeichen wie in Figur 4 bezeichnet.

Die Sandwiches 18''', 18^{IV}, 18^{v} gemäß den Figuren 3 bis 5 sind je nach Durchmesser des Gehäuses 16 beliebig radial erweiterbar. Auch in ihrer Länge sind die Sandwiches 18''', 18^{IV}, 18^{V} beliebig gestaltbar, je nach dem, welche Erwärmung des Luftstroms erzielt werden soll.

In den Figuren 6a und 6b ist in schematischer Draufsicht beziehungsweise in schematischer Schnittansicht entlang der Linie VIb-VIb in Figur 6a eine mögliche Struktur 40 der luftdurchflutbaren Schichten 10, 12, 30, 32, 38 dargestellt. Die Struktur 40 besteht hier aus einem so genannten Abstandsgewirke, welches an ihrer oberen und unteren Breitseite jeweils eine Deckschicht in Form einer Wabenstruktur 42 umfasst. Zwischen der oberen und unteren Deckschicht 42 erstrecken sich eine Vielzahl von Abstandsfäden beziehungsweise Abstandsstegen 44, welche sich im Wesentlichen quer zu den beiden Deckschichten 42 erstrecken. Durch die Orientierung und die Distanz der Abstandsfäden beziehungsweise Abstandsstege 42 zueinander kann dabei der Strömungswiderstand der Struktur 40 variiert werden und demgemäß die Strömungsgeschwindigkeit des durch die Struktur 40 hindurch gelangenden Luftstroms eingestellt werden. Im vorliegenden Ausführungsbeispiel können die Abstandsfäden oder Abstandsstege 44 insbesondere aus einem Kunststoff hergestellt sein. In einer besonderen Ausführungsform werden anstelle der Abstandsfäden oder Abstandsstege 44 auch Abstandsdrähte oder dergleichen verwendet, welche vorzugsweise aus einem gut wärmeleitenden Metall wie aus einer Aluminiumlegierung oder einer Kupferlegierung hergestellt sind. Derartige Metalldrähte haben gegenüber Kunststofffäden den Vorteil, dass diese zusätzlich die -mittels der Heizschicht erzeugte- Wärme besonders gut an die turbulente beziehungsweise diffuse Strömung des durch die luftdurchflutbare Schicht gelangenden Luftstroms erwärmen können.

In den Figuren 7a und 7b ist in schematischer Draufsicht beziehungsweise in schematischer Schichtansicht entlang der Linie VIIb-VIIb in Figur 7a die Struktur 40' der luftdurchflutbaren Schichten 10, 12, 30, 32, 38, nach einer weiteren Ausführungsform dargestellt. Hierbei verlaufen Abstandsstege beziehungsweise Abstandsdrähte 46 senkrecht zu den beiden Breitseiten der Struktur 40'. Die Abstandsstege beziehungsweise Abstandsdrähte 46 sind dabei -wie aus Figur 7a erkennbar- in Reihe zueinander angeordnet.

In den Figuren 8a und 8b ist in schematischer Draufsicht beziehungsweise in schematischer Schnittansicht entlang der Linie VIIIb-VIIIb in Figur 8a eine weitere Struktur 40" dargestellt, bei welcher sich zwischen den beiden Breitseiten der Struktur 40" Abstandsstege 48 mit im Wesentlichen rechteckförmigem Querschnitt erstrecken. Wie in Zusammenschau mit Figur 9, welche in Draufsicht die Anordnung der Abstandsstege 48 in einer alternativen Gestaltung zeigt, wird ersichtlich, dass die Stege längs, quer oder aber schräg zur Strömungsrichtung des die luftdurchflutbare Schicht durchströmenden Luftstroms ausgerichtet sein können.

Schließlich zeigen die Figuren 10a und 10b in schematischer Draufsicht beziehungsweise in Schnittansicht entlang der Linie Xb-Xb in Figur 10a eine Struktur 40''', bei welcher die Abstandsfäden, Abstandsstege oder Abstandsdrähte unorientiert zueinander nach Art einer Wolle ausgerichtet sind. Die Abstandsfäden, Abstandsstegen oder Abstandsdrähte können dabei insbesondere aus einem Kunststoff oder aber aus einem Metall hergestellt sein.

## Patentansprüche

1. Kraftfahrzeugheizvorrichtung mit einem Luftkanal zum Erwärmen eines Luftstroms mit im Kanal mindestens einer Heizschicht (14, 28, 34) aus elektrisch beheizbarem Material und mindestens einer luftdurchflutbaren Schicht (10, 12, 30, 32, 38), durch die der Luftstrom hindurchgelangen kann, wobei die luftdurchflutbare Schicht (10, 12, 30, 32, 38) eine Struktur (40, 40', 40'', 40''') aufweist, mittels welcher der Luftstrom im Kanal in eine turbulente beziehungsweise diffuse Strömung überführbar ist,
**dadurch gekennzeichnet,**
**dass** die Struktur (40) der luftdurchflutbaren Schicht (10, 12, 30, 32, 38) aus einem Gewirke, einem Gewebe, einem Geflecht oder ungeordnet nach Art einer Wolle gestaltet ist.

2. Kraftfahrzeugheizvorrichtung nach Anspruch 1,
**dadurch gekennzeichnet,**
**dass** die Struktur (40, 40', 40", 40''') der luftdurchflutbaren Schicht (10, 12, 30, 32, 38) eine Vielzahl von Abstandsfäden (44, 46), -stegen (48), - drähten oder dgl. umfasst.

3. Kraftfahrzeugheizvorrichtung nach Anspruch 1,
**dadurch gekennzeichnet,**
**dass** die luftdurchflutbare Schicht (10, 12, 30, 32, 38) an ihren beiden Breitseiten von jeweils einer Deckschicht (42) begrenzt ist.

4. Kraftfahrzeugheizvorrichtung nach Anspruch 3,
**dadurch gekennzeichnet,**
**dass** die beiden Deckschichten (42) im Wesentlichen eine Wabenstruktur aufweisen.

5. Kraftfahrzeugheizvorrichtung nach Anspruch 1,
**dadurch gekennzeichnet,**
**dass** die Struktur (40, 40', 40'', 40''') der luftdurchflutbaren Schicht (10, 12, 30, 32, 38) aus einem Kunststoff hergestellt ist.

6. Kraftfahrzeugheizvorrichtung nach Anspruch 1,
**dadurch gekennzeichnet,**
**dass** die Struktur (40, 40', 40'', 40''') der luftdurchflutbaren Schicht (10, 12, 30, 32, 38) aus einem Metall hergestellt ist.

7. Kraftfahrzeugheizvorrichtung nach Anspruch 1,
**dadurch gekennzeichnet,**
**dass** die Struktur (40, 40', 40", 40''') der luftdurchflutbaren Schicht (10, 12, 30, 32, 38) leicht verformbar ausgebildet ist.

8. Kraftfahrzeugheizvorrichtung nach Anspruch 1,
**dadurch gekennzeichnet,**
**dass** die Struktur (40, 40', 40'', 40''') der luftdurchflutbaren Schicht (10, 12, 30, 32, 38) elastisch nachgiebig ausgebildet ist.

9. Kraftfahrzeugheizvorrichtung nach Anspruch 1,
**dadurch gekennzeichnet,**
**dass** die Heizschicht (14, 28, 34) eine Widerstandsheizung umfasst und als dünnschichtige, verformbare und vorzugsweise elastische Lage (22) ausgebildet ist.

10. Kraftfahrzeugheizvorrichtung nach Anspruch 1,
**dadurch gekennzeichnet,**
**dass** der Heizschicht (14, 28, 34) eine gut wärmeleitende Deckschicht (24) zugeordnet ist, welche zwischen der Heizschicht (14, 28, 34) und der luftdurchflutbaren Schicht (10, 12, 30, 32, 38) angeordnet ist.

11. Kraftfahrzeugheizvorrichtung nach Anspruch 10,
**dadurch gekennzeichnet,**
**dass** die Deckschicht (24) aus einer Metallfolie oder einem Metallblech besteht.

12. Kraftfahrzeugheizvorrichtung nach Anspruch 1,
**dadurch gekennzeichnet,**
**dass** wenigstens drei luftdurchflutbare Schichten (10, 12) vorgesehen sind, wobei zwischen der mittleren und den äußeren luftdurchflutbaren Schichten (10, 12) jeweils eine Heizschicht (14) angeordnet ist.

13. Kraftfahrzeugheizvorrichtung nach Anspruch 12,
**dadurch gekennzeichnet,**
**dass** die beiden Heizschichten (14) auf ihrer jeweils der mittleren luftdurchflutbaren Schicht (10) zugewandten Innenseite eine wärmeleitende Deckschicht (24) aufweisen.

14. Kraftfahrzeugheizvorrichtung nach Anspruch 12,
**dadurch gekennzeichnet,**
**dass** die Struktur (40, 90' , 40'', 40''') der luftdurchflutbaren mittleren Schicht (10) einen höheren Strömungswiderstand aufweist als die Struktur (40, 40', 40'', 40''') der luftdurchflutbaren äußeren Schichten (12).

15. Heizvorrichtung nach Anspruch 12,
**dadurch gekennzeichnet,**
**dass** die beiden äußeren luftdurchflutbaren Schichten (12) außenseitig von einer Gehäusewand (16) oder dgl. Schicht abgedeckt sind.

16. Kraftfahrzeugheizvorrichtung nach Anspruch 1,
**dadurch gekennzeichnet,**
**dass** jeder luftdurchflutbaren Schicht (10, 12, 30, 32, 38) ein Gebläse (20) zugeordnet ist, mittels welchem Luft an einer Schmalseite der Schicht (10, 12, 30, 32, 38) eingeblasen wird.

17. Kraftfahrzeugheizvorrichtung nach Anspruch 1,
**dadurch gekennzeichnet,**
**dass** das Sandwich (18''') aus der luftdurchflutbaren Schicht (30) und der Heizschicht (28) im Wesentlichen schneckenförmig aufgewickelt ist.

18. Kraftfahrzeugheizvorrichtung nach Anspruch 17,
**dadurch gekennzeichnet,**
**dass** die luftdurchflutbare Schicht (32) umfangsseitig von der Heizschicht (34) umgeben ist.

19. Kraftfahrzeugheizvorrichtung nach Anspruch 18,
**dadurch gekennzeichnet,**
**dass** die Heizschicht (34) umfangsseitig von einer weiteren luftdurchflutbaren Schicht (38) umgeben ist.

20. Kraftfahrzeugheizvorrichtung nach Anspruch 1,
**dadurch gekennzeichnet,**
**dass** die die Struktur (40, 40', 40'', 40''') der luftdurchflutbaren inneren Schicht (32) einen höheren Strömungswiderstand aufweist als die Struktur (40, 40', 40'', 40''') der luftdurchflutbaren umfangsseitig äußeren Schicht (38) .

21. Kraftfahrzeugheizvorrichtung nach Anspruch 1,
**dadurch gekennzeichnet,**
**dass** die Kraftfahrzeugheizvorrichtung im Querschnitt im wesentlichen kreisförmig oder oval ausgebildet ist.

## Claims

1. Heating device for motor vehicles, comprising an air duct for heating an airflow, the duct containing at least one heating layer (14, 28, 34) made from an electrically heatable material and at least one layer (10, 12, 30, 32, 38) through which air can flow and through which the airflow can penetrate, wherein the layer (10, 12, 30, 32, 38) through which air can flow has a structure (40, 40', 40", 40"') by means of which the airflow in the duct can be converted into a turbulent or diffuse flow,
**characterised in that**
the structure (40) of the layer (10, 12, 30, 32, 38) through which air can flow is formed from a knitted fabric, a woven fabric, a braided fabric or unoriented in the manner of a wool.

2. Heating device for motor vehicles according to claim 1,
**characterised in that**
the structure (40, 40', 40", 40"') of the layer (10, 12, 30, 32, 38) through which air can flow includes a plurality of spacer threads (44, 46), spacer webs (48), spacer wires or the like.

3. Heating device for motor vehicles according to claim 1,
**characterised in that**
the layer (10, 12, 30, 32, 38) through which air can flow is bounded by a cover layer (42) on each of its broadsides.

4. Heating device for motor vehicles according to claim 3,
**characterised in that**
the two cover layers (42) essentially have a honeycomb structure.

5. Heating device for motor vehicles according to claim 1,
**characterised in that**
the structure (40, 40', 40", 40"') of the layer (10, 12, 30, 32, 38) through which air can flow is made of a plastic material.

6. Heating device for motor vehicles according to claim 1,
**characterised in that**
the structure (40, 40', 40", 40"') of the layer (10, 12, 30, 32, 38) through which air can flow is made of a metal.

7. Heating device for motor vehicles according to claim 1,
**characterised in that**
the structure (40, 40', 40", 40"') of the layer (10, 12, 30, 32, 38) through which air can flow is designed to be easily deformable.

8. Heating device for motor vehicles according to claim 1,
**characterised in that**
the structure (40, 40', 40", 40"') of the layer (10, 12, 30, 32, 38) through which air can flow is designed to yield elastically.

9. Heating device for motor vehicles according to claim 1,
**characterised in that**
the heating layer (14, 28, 34) comprises resistance heating and is designed as a thin, deformable and preferably elastic layer (22).

10. Heating device for motor vehicles according to claim 1,
**characterised in that**
a cover layer (24) of good thermal conductivity, which is disposed between the heating layer (14, 28, 34) and the layer (10, 12, 30, 32, 38) through which air can flow, is assigned to the heating layer (14, 28, 34).

11. Heating device for motor vehicles according to claim 10,
**characterised in that**
the cover layer (24) is made of a metal foil or of sheet metal.

12. Heating device for motor vehicles according to claim 1,
**characterised in that**
at least three layers (10, 12) through which air can flow are provided, with heating layers (14) provided between the central and outer layers (10, 12) through which air can flow.

13. Heating device for motor vehicles according to claim 12,
**characterised in that**
each of the two heating layers (14) is provided with a thermally conductive cover layer (24) on the side facing the central layer (10) through which air can flow.

14. Heating device for motor vehicles according to claim 12,
**characterised in that**
the structure (40, 40', 40", 40"') of the central layer (10) through which air can flow has a higher flow resistance than the structure (40, 40', 40", 40"') of the outer layers (12) through which air can flow.

15. Heating device for motor vehicles according to claim 12,
**characterised in that**
the two outer layers (12) through which air can flow are covered on the outside by a housing wall (16) or a similar layer.

16. Heating device for motor vehicles according to claim 1,
**characterised in that**
a fan (20) is assigned to each layer (10, 12, 30, 32, 38) through which air can flow, by means of which air is blown in on a narrow side of the layer (10, 12, 30, 32, 38).

17. Heating device for motor vehicles according to claim 1,
**characterised in that**
the sandwich (18"') consisting of the layer (30) through which air can flow and the heating layer (28) is substantially wound in the shape of a volute.

18. Heating device for motor vehicles according to claim 17,
**characterised in that**
the layer (32) through which air can flow is circumferentially surrounded by the heating layer (34).

19. Heating device for motor vehicles according to claim 18,
**characterised in that**
the heating layer (34) is circumferentially surrounded by a further layer (38) through which air can flow.

20. Heating device for motor vehicles according to claim 1,
**characterised in that**
the structure (40, 40', 40", 40"') of the inner layer (32) through which air can flow has a higher flow resistance than the structure (40, 40', 40", 40"') of the circumferentially outer layer (38) through which air can flow.

21. Heating device for motor vehicles according to claim 1,
**characterised in that**
the heating device for motor vehicles has a substantially circular or oval cross-section.

## Revendications

1. Dispositif de chauffage d'un véhicule automobile doté d'un canal d'air servant à chauffer un flux d'air comprenant au moins dans le canal une couche chauffante (14, 28, 34) en matériau électriquement chauffable ainsi qu'au moins une couche (10, 12, 30, 32, 38) traversable par l'air à travers laquelle le flux d'air peut passer, la couche traversable (10, 12, 30, 32, 38) présente une structure grâce à laquelle le flux d'air peut être transformé en un écoulement turbulent, de préférence diffus dans le canal, **caractérisé en ce que** la structure (40) de la couche traversable (10, 12, 30, 32, 38) par l'air est conçue à partir d'un maillage, un tissage, un grillage ou dans le désordre d'un genre de laine.

2. Dispositif de chauffage d'un véhicule automobile selon la revendication 1, **caractérisé en ce que** la structure (40, 40', 40", 40"') de la couche traversable (10, 12, 30, 32, 38) par l'air comprend une pluralité de fils (44, 46), nervures (48) ou fils métalliques d'écartement ou d'autres éléments similaires.

3. Dispositif de chauffage d'un véhicule automobile selon la revendication 1, **caractérisé en ce que** la couche traversable (10, 12, 30, 32, 38) par l'air est limitée sur ses deux côtés larges par une couche de recouvrement (42).

4. Dispositif de chauffage d'un véhicule automobile selon la revendication 3, **caractérisé en ce que** les deux couches de recouvrement (42) présentent essentiellement une structure en nid d'abeilles.

5. Dispositif de chauffage d'un véhicule automobile selon la revendication 1, **caractérisé en ce que** la structure (40, 40', 40", 40"') de la couche traversable (10, 12, 30, 32, 38) par l'air est fabriquée en matière plastique.

6. Dispositif de chauffage d'un véhicule automobile selon la revendication 1, **caractérisé en ce que** la structure (40, 40', 40", 40"') de la couche traversable (10, 12, 30, 32, 38) par l'air est fabriquée en métal.

7. Dispositif de chauffage d'un véhicule automobile selon la revendication 1, **caractérisé en ce que** la structure (40, 40', 40", 40"') de la couche traversable (10, 12, 30, 32, 38) est conçue de façon à être légèrement déformable.

8. Dispositif de chauffage d'un véhicule automobile selon la revendication 1, **caractérisé en ce que** la structure (40, 40', 40", 40"') de la couche traversable (10, 12, 30, 32, 38) est élastique.

9. Dispositif de chauffage d'un véhicule automobile selon la revendication 1, **caractérisé en ce que** la couche chauffante (14, 28, 34) comprend un chauffage ohmique et est conçue comme une couche (22) déformable, en couche mince et de préférence élastique.

10. Dispositif de chauffage d'un véhicule automobile selon la revendication 1, **caractérisé en ce que** la couche chauffante (14, 28, 34) est associée à une couche de recouvrement (24) thermoconductrice qui est disposée entre la couche chauffante (14, 28, 34) et la couche traversable (10, 12, 30, 32, 38) par l'air.

11. Dispositif de chauffage d'un véhicule automobile selon la revendication 10, **caractérisé en ce que** la couche de recouvrement (24) est composée d'une feuille de métal et d'une tôle métallique.

12. Dispositif de chauffage d'un véhicule automobile selon la revendication 1, **caractérisé en ce qu'**au moins trois couches traversables (10, 12) par l'air sont prévues, entre la couche médiane traversable par l'air et celle extérieure (10, 12) est disposée une couche chauffante (14).

13. Dispositif de chauffage d'un véhicule automobile selon la revendication 12, **caractérisé en ce que** les deux couches chauffantes (14) présentent une couche (24) de recouvrement médiane thermoconductrice sur chacun de leur côté intérieur orienté vers la couche traversable (10) par l'air.

14. Dispositif de chauffage d'un véhicule automobile selon la revendication 12, **caractérisé en ce que** la structure (40, 40', 40", 40"') de la couche traversable (10) par l'air présente une résistance à l'écoulement élevée en tant que structure (40, 40', 40", 40"') des couches extérieures traversables par l'air.

15. Dispositif de chauffage selon la revendication 12, **caractérisé en ce que** les deux couches extérieures traversables (12) par l'air sont recouvertes sur le côté extérieur par une paroi de boîtier (16) ou d'une couche similaire.

16. Dispositif de chauffage d'un véhicule automobile selon la revendication 1, **caractérisé en ce que** chaque couche traversable (10, 12, 30, 32, 38) par l'air est associée à un ventilateur (20) au moyen duquel l'air est soufflé sur le petit côté de la couche (10, 12, 30, 32, 38).

17. Dispositif de chauffage d'un véhicule automobile selon la revendication 1, **caractérisé en ce que** le sandwich (IS1") de la couche traversable (30) par l'air et la couche chauffante (28) est enroulé essentiellement de manière hélicoïdale.

18. Dispositif de chauffage d'un véhicule automobile selon la revendication 17, **caractérisé en ce que** la couche traversable (32) par l'air est entourée sur la périphérie par la couche chauffante (34).

19. Dispositif de chauffage d'un véhicule automobile selon la revendication 18, **caractérisé en ce que** la couche chauffante (34) est entourée sur la périphérie par une autre couche traversable (38) par l'air.

20. Dispositif de chauffage d'un véhicule automobile selon la revendication 1, **caractérisé en ce que** la structure (40, 40', 40", 40"') de la couche intérieure traversable (32) par l'air présente une résistance à l'écoulement plus élevée que celle de la structure (40, 40', 40", 40"') de la couche extérieure (38) traversable par l'air sur la périphérie.

21. Dispositif de chauffage d'un véhicule automobile selon la revendication 1, **caractérisé** le dispositif de chauffage d'un véhicule automobile est conçu dans la section transversale essentiellement en forme circulaire ou ovale.
